# FASCICULE DE BREVET EUROPEEN

(11) **EP 3 700 173 B1**
(45) Date de publication et mention de la délivrance du brevet: **24.11.2021**
(21) Numéro de dépôt: 20158960.3
(22) Date de dépôt: 24.02.2020
(51) Int. Cl.: H04L 29/08, G05D 1/02

(54) **DISPOSITIF DE SURVEILLANCE À DISTANCE D'UNE FLOTTE DE VÉHICULES AUTOMOBILES AUTONOMES, SYSTÈME DE TRANSPORT ET PROCÉDÉ DE BRIDAGE ASSOCIÉS**
FERNÜBERWACHUNGSSYSTEM EINER FLOTTE VON AUTONOMEN KRAFTFAHRZEUGEN, ENTSPRECHENDES TRANSPORTSYSTEM UND SPANNVERFAHREN
DEVICE FOR REMOTE MONITORING OF A FLEET OF AUTONOMOUS MOTOR VEHICLES, ASSOCIATED TRANSPORT SYSTEM AND CLAMPING METHOD

(30) Priorité: 25.02.2019 FR 1901895
(43) Date de publication de la demande: 26.08.2020
(73) Titulaire: Transdev Group, 92130 Issy les Moulineaux (FR)
(72) Inventeur: BEAUVILLAIN, Alexis, 91300 Massy (FR)
(74) Mandataire: Lavoix

(56) Documents cités:
- EP-A1- 0 884 666
- US-A1- 2013 030 606
- US-A1- 2018 231 982

## Description

La présente invention concerne un dispositif de surveillance à distance d'une flotte de véhicules automobiles autonomes permettant le pilotage à distance de la flotte par un opérateur et comprenant au moins un écran d'affichage, le dispositif de surveillance étant propre à recevoir au moins une information d'au moins un premier capteur surveillant l'environnement d'un véhicule d'intérêt de la flotte, le dispositif de surveillance étant propre à afficher l'au moins une information sur l'écran d'affichage.

L'invention concerne également un système de transport comprenant un tel dispositif de surveillance et une flotte de véhicules automobiles autonomes surveillés à distance par le dispositif de surveillance.

L'invention concerne également un procédé de bridage mis en oeuvre par un tel dispositif de surveillance.

L'invention concerne également un produit programme ordinateur comportant les instructions logicielles qui, lorsque mises en oeuvre par un équipement informatique, mettent en oeuvre un tel procédé de bridage.

L'invention concerne notamment le domaine des véhicules automobiles autonomes, en particulier des véhicules automobiles autonomes ayant un niveau d'automatisation (de l'anglais *level of automation*) supérieur ou égal à 3 selon le barème de l'Organisation Internationale des Constructeurs Automobiles (OICA).

On connait des documents US 2013/030606 A1, EP 0 884 666 A1 et US 2018/231982 A1 des procédés de contrôle de tels véhicules automobiles autonomes.

En particulier, l'invention concerne le pilotage à distance d'un véhicule par un opérateur. Il est connu, lorsqu'un véhicule autonome rencontre une situation problématique, de permettre à un opérateur à distance de prendre le contrôle du véhicule afin de résoudre cette situation. Par exemple, lorsqu'un véhicule rencontre un obstacle situé sur une voie délimitée par un trottoir et une ligne blanche continue, le véhicule est éventuellement dans l'incapacité de choisir une stratégie de contournement de l'obstacle respectant les consignes de sécurités imposées. L'opérateur prenant le contrôle du véhicule peut alors mieux se rendre compte de la situation et envoyer une consigne au véhicule permettant de résoudre la situation problématique tout en s'assurant de la sécurité des passagers du véhicule.

Toutefois, la sécurité des passagers du véhicule lors de ce pilotage à distance peut encore être améliorée, notamment en cas de consigne envoyée au véhicule de contourner un obstacle ou de franchir une ligne blanche.

Un objectif de l'invention est ainsi de fournir un dispositif électronique de surveillance permettant une sécurité améliorée pour les passagers du véhicule.

A cet effet, l'invention a pour objet un dispositif électronique de surveillance selon la revendication 1.

Selon des modes de réalisation particuliers de l'invention, le dispositif de surveillance est selon l'une quelconque des revendications 2 à 8.

L'invention a également pour objet un système de transport selon la revendication 9.

L'invention a également pour objet un procédé de bridage selon la revendication 10.

L'invention a également pour objet un programme d'ordinateur selon la revendication 11.

L'invention sera mieux comprise à la lecture de la description qui va suivre, donnée uniquement à titre d'exemple et faite en se référant aux figures annexées parmi lesquelles :
- la figure 1 est une vue schématique d'un système de transport selon l'invention, et
- la figure 2 est un diagramme en blocs illustrant un procédé de bridage mis en œuvre par un dispositif de bridage disposé dans un dispositif de surveillance du système de transport de la figure 1.

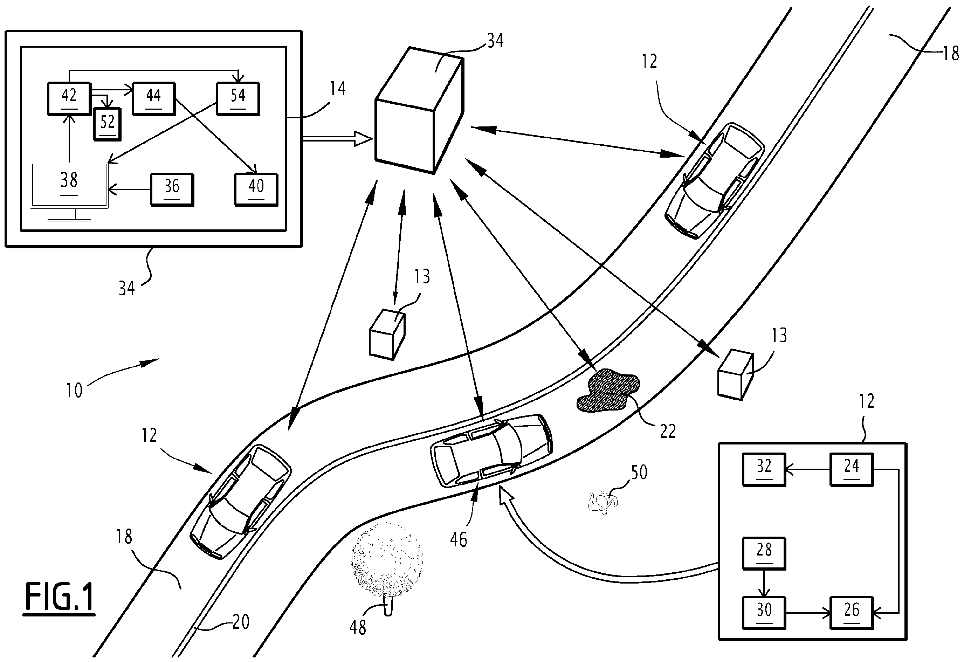

Comme représenté sur la figure 1, un système de transport 10 comprend une flotte d'au moins un véhicule 12, au moins un capteur 13, également appelé capteur d'infrastructure, et un dispositif 14 de surveillance à distance de la flotte de véhicules 12 pour le pilotage à distance de la flotte par un opérateur.

Chaque véhicule automobile 12 est propre à circuler le long de voie(s) de circulation 18. Chaque voie de circulation 18 est une partie d'une chaussée affectée à la circulation de véhicules dans un sens de circulation. La chaussée comprend par exemple une seule voie de circulation 18. En variante, comme représenté sur la figure 1, la chaussée comprend deux voies de circulation 18 associées à des sens de circulation opposés et séparées par une ligne blanche continue 20. Dans une autre variante, la chaussée comprend de deux à quatre voies de circulation 18 dans chaque sens de circulation. Chaque voie de circulation 18 est typiquement matérialisée par un marquage au sol comme une ligne blanche par exemple.

Sur l'exemple illustré de la figure 1, un obstacle 22 est situé sur l'une des voies de circulations 18. L'obstacle 22 est propre à gêner la circulation de l'un des véhicules 12 sur la voie de circulation 18. L'obstacle 22 est par exemple une pierre, de la terre, une partie de carrosserie de véhicule, un sac plastique ou une cavité dans ladite voie de circulation 18.

Par la suite, un unique véhicule 12 va être décrit. L'homme du métier comprendra que les autres véhicules 12 de la flotte sont similaires.

Le véhicule 12 comprend, de manière connue, des roues arrière, des roues avant, un moteur relié mécaniquement via une chaîne de transmission aux roues arrière et/ou avant pour l'entraînement desdites roues en rotation autour de leur axe, un système de direction, adapté pour agir sur les roues avant et/ou arrières du véhicule 12 de manière à modifier l'orientation de sa trajectoire, et un système de freinage, adapté pour exercer une force de freinage sur les roues du véhicule 12.

Le véhicule 12 est typiquement constitué par un véhicule à traction et/ou propulsion électrique. A cet effet, le moteur est constitué par un moteur électrique, et le véhicule 12 comprend une batterie électrique raccordée électriquement au moteur pour l'alimentation du moteur en électricité.

Le véhicule 12 est un véhicule automobile autonome. A cet effet, le véhicule comprend au moins un capteur 24, également appelé capteur embarqué, surveillant l'environnement du véhicule 12. Le ou chaque capteur 24 est propre à détecter au moins une information relative au véhicule 12 ou à l'environnement du véhicule 12. En particulier, l'au moins un capteur 24 est propre à détecter l'obstacle 22 sur la voie de circulation 18. Chaque capteur 24 est par exemple une caméra, un capteur infrarouge, un radar, un LIDAR, un capteur de température, un capteur de pression et/ou un capteur d'humidité.

Le véhicule 12 comprend en outre un dispositif électronique de conduite autonome 26 adapté pour piloter le véhicule 12 de manière autonome en recevant des informations sur l'environnement du véhicule 12 par l'intermédiaire des capteurs 24 et en agissant sur le moteur, le système de direction et le système de freinage, de manière à modifier la vitesse, l'accélération et la trajectoire du véhicule 12 en réaction aux informations reçues.

Le véhicule 12 automobile autonome présente de préférence un niveau d'automatisation supérieur ou égal à 3 selon le barème de l'Organisation Internationale des Constructeurs Automobiles (OICA). Le niveau d'automatisation est alors égal à 3, c'est-à-dire une automatisation conditionnelle (de l'anglais *Conditional Automation*), ou égal à 4, c'est-à-dire une automatisation élevée (de l'anglais *High Automation*), ou encore égal à 5, c'est-à-dire une automatisation complète (de l'anglais *Full Automation*).

Selon le barème de l'OICA, le niveau 3 d'automatisation conditionnelle correspond à un niveau pour lequel le conducteur n'a pas besoin de surveiller en permanence la conduite dynamique, ni l'environnement de conduite, tout en devant toujours être en mesure de reprendre le contrôle du véhicule 12 automobile autonome. Selon ce niveau 3, le dispositif électronique de conduite autonome 26, embarqué à bord du véhicule 12 automobile autonome, effectue alors la conduite longitudinale et latérale dans un cas d'utilisation défini et est apte à reconnaître ses limites de performance pour demander alors au conducteur de reprendre la conduite dynamique avec une marge de temps suffisante.

Le niveau 4 d'automatisation élevée correspond à un niveau pour lequel le conducteur n'est pas requis dans un cas d'utilisation défini. Selon ce niveau 4, le dispositif électronique de conduite autonome 26, embarquée à bord du véhicule 12 automobile autonome, exécute alors la conduite dynamique latérale et longitudinale dans toutes les situations de ce cas d'utilisation défini.

Le niveau 5 d'automatisation complète correspond enfin à un niveau pour lequel le dispositif électronique de conduite autonome 26, embarqué à bord du véhicule 12 automobile autonome, effectue la conduite dynamique latérale et longitudinale dans toutes les situations rencontrées par le véhicule 12 automobile autonome, pendant tout son trajet. Aucun conducteur n'est alors requis.

Le véhicule 12 comprend en outre un module de réception de commandes 28, un module de transmission 30 et un module d'envoi 32.

Le module de réception de commandes 28 est propre à recevoir au moins une commande de mouvement de la part du dispositif de surveillance 14.

Une commande de mouvement est par exemple une commande de modification de trajectoire du véhicule 12, une commande de contournement de l'obstacle 22, une commande d'ignorance de l'obstacle 22, une commande d'attente, une commande de ralentissement ou une commande d'arrêt du véhicule 12.

Le module de réception de commandes 28 est propre à transmettre l'au moins une commande au module de transmission 30.

Le module de transmission 30 est propre à transmettre l'au moins une commande de mouvement au reste du véhicule 12.

En particulier, le module de transmission 30 est propre à transmettre la commande au dispositif électronique de conduite autonome 26 du véhicule 12. Le dispositif électronique de conduite autonome 26 est alors configuré pour mettre en œuvre la commande.

Le module d'envoi 32 est propre à recevoir l'au moins une information détectée par l'au moins un capteur embarqué 24 dans l'un des véhicules 12.

Le module d'envoi 32 est propre à envoyer l'au moins une information au dispositif de surveillance 14.

Dans un mode de réalisation avantageux, le module d'envoi 32 est en outre propre à calculer une incertitude de mesure de l'au moins une information reçue.

L'incertitude de mesure est une valeur caractéristique de la dispersion des mesures d'une grandeur ou une probabilité que l'information reçue soit exacte.

Le module d'envoi 32 calcule cette incertitude par des méthodes statistiques connues en soi.

Le module d'envoi 32 est alors propre à envoyer l'au moins une information au dispositif de surveillance 14 ainsi que l'incertitude de mesure associée.

Le dispositif électronique de conduite autonome 26, le module de réception de commandes 28, le module de transmission 30 et le module d'envoi 32 sont typiquement réalisés sous la forme de logiciels stockés dans une mémoire (non représentée) et aptes à être exécutés par un processeur (non représenté) associé à ladite mémoire, la mémoire et le processeur formant ensemble une unité de traitement d'informations incluse dans le véhicule 12. En variante, le dispositif électronique de conduite autonome 26, le module de réception de commandes 28, le module de transmission 30 et le module d'envoi 32 sont réalisés sous la forme d'un composant logique programmable ou sous la forme d'un circuit intégré dédié inclus dans la voiture 12.

Chaque capteur d'infrastructure 13 est disposé le long des voies de circulation 18. En particulier, chaque capteur d'infrastructure 13 est situé à une distance inférieure à 500 m des voies de circulation 18. Chaque capteur d'infrastructure 13 est par exemple fixe, au sens où sa position géographique ne varie pas au cours du temps, tout en permettant une rotation du capteur d'infrastructure 13 autour d'au moins un axe.

Chaque capteur d'infrastructure 13 est propre à détecter au moins une information sur l'environnement du capteur d'infrastructure 13 et/ou d'au moins l'un des véhicules 12 de la flotte. En particulier, chaque capteur d'infrastructure 13 est par exemple une caméra, un capteur de température, un capteur de pression, un capteur d'humidité ou un lidar.

Chaque capteur d'infrastructure 13 est propre à envoyer l'au moins une information au dispositif de surveillance 14.

Avantageusement, le capteur d'infrastructure 13 est propre à horodater l'au moins une information au moment de son envoi.

Le dispositif de surveillance 14 est disposé dans un poste de contrôle 34 distant. Le poste de contrôle 34 est situé à distance des véhicules 12 et assure le contrôle des véhicules 12 par un opérateur.

Le dispositif de surveillance 14 et les véhicules 12 sont propres à communiquer entre eux.

Le dispositif de surveillance 14 comprend un module de réception d'informations 36, au moins un écran d'affichage 38, un module de commande 40, un module de traitement 42 et un module de limitation 44.

Le module de réception d'informations 36 est propre à recevoir au moins une information d'au moins un premier capteur surveillant l'environnement d'un véhicule d'intérêt 46 de la flotte de véhicules 12.

Le véhicule d'intérêt 46 est l'un des véhicules 12 circulant sur les voies 18.

Le premier capteur est avantageusement choisi parmi le groupe consistant en : un capteur 24 embarqué à bord du véhicule d'intérêt 46 ou l'un des capteurs d'infrastructure 13 disposés à l'extérieur des véhicules autonomes 12.

L'au moins une information reçue par le dispositif de surveillance 14 est choisi parmi le groupe consistant en :
- une position géographique du véhicule d'intérêt 46 ;
- une vitesse du véhicule d'intérêt 46 ;
- une accélération du véhicule d'intérêt 46 ;
- une position géographique d'un élément 47 environnant le véhicule d'intérêt 46 ;
- une vitesse d'un élément 47 environnant le véhicule d'intérêt 46 ;
- une accélération d'un élément 47 environnant le véhicule d'intérêt 46 ; et
- une classification d'un élément 47 environnant par le véhicule d'intérêt 46.

Par « environnant », on entend que l'élément 47 est situé à une distance par exemple inférieure à 100 m du véhicule d'intérêt 46.

L'élément 47 environnant le véhicule d'intérêt 46 est choisi parmi le groupe consistant en :
- un objet 48 situé dans les environs du véhicule d'intérêt 46 ;
- un individu 50 situé dans les environs du véhicule d'intérêt 46 ; et
- un obstacle 22 rencontré par le véhicule d'intérêt 46.

Par « environs du véhicule d'intérêt 46 », on comprend ici et dans la suite une portion de l'espace centrée sur le véhicule d'intérêt 46 et présentant un rayon déterminé, par exemple inférieur à 100 m.

La position géographique est par exemple définie par au moins deux coordonnées géographiques telles que la longitude et la latitude.

L'objet 48 est par exemple un objet propre à se déplacer sur les voies 18 tel que l'un des véhicules 12, un véhicule automobile ne faisant pas partie de la flotte, une moto, un vélo ou un objet fixe par rapport aux voies 18 tel qu'un arbre, un poteau ou un obstacle 22.

L'individu 50 est par exemple un piéton marchant sur un trottoir longeant les voies 18, un ouvrier travaillant sur un chantier sur les voies ou un policier régulant le trafic sur les voies 18.

La classification de l'élément 47 est l'attribution d'une catégorie prédéterminée à l'élément 47. La catégorie prédéterminée est par exemple choisi dans le groupe consistant en : un piéton, un cycliste, une moto, une voiture, un camion et un objet fixe.

Dans un mode de réalisation avantageux, le dispositif de surveillance 14 est propre à recevoir en outre au moins une information d'au moins un deuxième capteur. Le deuxième capteur est choisi parmi le groupe consistant en : un capteur embarqué 24 dans l'un des véhicules autonomes 12 et l'un des capteurs d'infrastructure 13 disposés à l'extérieur des véhicules autonomes 12.

Ainsi, le module de réception d'informations 36 est propre à recevoir des informations d'au moins deux capteurs embarqués 24 ou propre à recevoir des informations d'au moins deux capteurs d'infrastructures 13 ou propre à recevoir des informations d'au moins un capteur embarqué 24 et d'au moins l'un des capteurs d'infrastructure 13.

Chaque écran d'affichage 38 est propre à afficher l'au moins une information reçue par le dispositif de surveillance 14.

Le module de commande 40 est propre à envoyer au moins une commande de mouvement à la flotte de véhicules 12.

La commande de mouvement est avantageusement déterminée par l'opérateur en fonction de l'au moins une information affichée sur l'écran d'affichage 38.

Le module de traitement 42 est configuré pour déterminer une incertitude de mesure de l'au moins une information envoyée par l'au moins un premier capteur et/ou pour mesurer une latence entre l'envoi de l'au moins une information par l'au moins un premier capteur et l'affichage de l'au moins une information sur l'écran d'affichage 38.

Lorsque le module d'envoi 32 du véhicule d'intérêt 46 est propre à calculer l'incertitude de mesure de l'information qu'il envoie au dispositif de surveillance 14, le module de traitement 42 est propre à déterminer l'incertitude de mesure uniquement en recevant l'incertitude calculée par le module d'envoi 32.

En variante, lorsque le module d'envoi 32 est propre à envoyer seulement l'information sans l'incertitude associée, le module de traitement 42 est propre à déterminer l'incertitude en calculant cette incertitude de mesure à partir de l'au moins une information reçue. Le module de module de traitement 42 calcule cette incertitude par des méthodes statistiques connues en soi.

La latence est typiquement mesurée par différence entre l'heure d'envoi de l'au moins une information par le premier capteur et l'heure l'affichage de l'au moins une information sur l'écran d'affichage 38. A cet effet, le premier capteur est par exemple propre à horodater, via le module d'envoi 32, l'au moins une information au moment de son envoi et le module de réception de commandes 36 est propre à horodater la commande au moment de sa réception. Le module de traitement 42 est alors propre à lire les deux horodatages et d'en faire la différence afin de déterminer la latence.

Le module de traitement 42 est propre à envoyer l'au moins une information reçue avec l'incertitude de mesure associée et/ou latence mesurée au module de limitation 44.

Le module de limitation 44 est configuré pour limiter le pilotage dudit véhicule d'intérêt 46 par l'opérateur en fonction de l'incertitude déterminée et/ou de la latence mesurée.

En particulier, le module de limitation 44 est propre à bloquer l'envoi de toute commande de mouvement au véhicule 12 d'intérêt lorsqu'au moins l'une des incertitudes déterminées est supérieure à un seuil d'incertitude prédéterminé. La valeur du seuil d'incertitude est propre à chaque type d'information.

A titre d'exemple, le seuil d'incertitude associé à une position géographique d'un élément 47 environnant le véhicule d'intérêt 46 est supérieur à 1 m.

A titre d'autre exemple, le seuil d'incertitude associé à une vitesse d'un élément 47 est supérieur à 10 km/h.

A titre d'autre exemple, le seuil d'incertitude associé à la catégorisation d'un élément 47 est supérieur à 30% d'incertitude sur la catégorie de l'élément 47.

En variante ou en complément, le module de limitation 44 est propre à bloquer l'envoi de toute commande de mouvement au véhicule 12 d'intérêt lorsque la latence mesurée est supérieure à un seuil de latence prédéterminée. Le seuil de latence est par exemple supérieur à 200 ms.

Le blocage de l'envoi de commande permet d'éviter un déplacement dangereux du véhicule d'intérêt 12 lorsque les informations reçues présentent une incertitude trop élevée et/ou la réception de ces informations par le dispositif de surveillance 14 est effectuée avec un retard trop important par rapport à leur envoi par le premier capteur. En effet, une telle incertitude et/ou un tel retard peut entrainer la détermination d'une consigne de mouvement qui ne serait pas pertinente en regard de la réalité actuelle de l'environnement du véhicule 12 d'intérêt. Le blocage de l'envoi de commande permet alors de garantir la sécurité des passagers du véhicule d'intérêt 46.

Le dispositif de surveillance 14 comprend en outre avantageusement un module de délestage 52.

Le module de délestage 52 est propre à recevoir du module de traitement 42 l'au moins une information avec la latence mesurée.

Le module de délestage 52 est propre à désactiver la communication entre le dispositif de surveillance 14 et au moins l'un des véhicules 12 de la flotte, notamment un véhicule 12 différent du véhicule d'intérêt 46, ou avec au moins l'un des capteurs d'infrastructure 13, en fonction de la latence mesurée.

En particulier, le module de délestage 52 est propre à désactiver la communication entre le dispositif de surveillance 14 et un véhicule 12 présentant un risque de sécurité pour les passagers moins grave que pour le véhicule d'intérêt 46.

La désactivation de la communication avec au moins l'un des véhicules 12 ou au moins l'un des capteurs d'infrastructure 13 permet de diminuer le flux d'informations remonté au dispositif de surveillance 14 par les voitures 12 et les capteurs 13 et ainsi de diminuer la latence de la communication entre le dispositif de surveillance 14 et le véhicule d'intérêt 46.

Dans un mode de réalisation avantageux, lorsque le dispositif de surveillance 14 est propre à recevoir des informations d'au moins un deuxième capteur 24, 13, le module de délestage 52 est propre à désactiver la communication entre le dispositif de surveillance 14 et l'au moins un deuxième capteur 24, 13 en fonction de l'incertitude déterminée et/ou de la latence mesurée.

En particulier, le module de délestage 52 est propre à déterminer un niveau de criticité associé à chaque capteur 24, 13. Le niveau de criticité traduit l'impact potentiel des informations remontées par le capteur 24, 13 sur le pilotage du véhicule d'intérêt 46 par l'opérateur. Le niveau de criticité d'un capteur 24, 13 est d'autant plus élevé que l'au moins une information remontée aura un impact fort sur les consignes envoyées par l'opérateur. Ainsi, à titre d'exemple, le niveau de criticité associé à une caméra est supérieur à celui associé à un capteur de température.

Le module de délestage 52 est propre à désactiver la communication entre le dispositif de surveillance 14 et le ou les capteurs 24, 13 présentant le niveau de criticité le plus faible.

La désactivation de la communication avec l'au moins un deuxième capteur 24, 13 permet de diminuer le flux d'informations remonté par les capteurs 24, 13 au dispositif de surveillance 14 et d'ainsi diminuer la latence de la communication.

En variante ou en complément, le module de délestage 52 est propre à désactiver la communication entre le dispositif de surveillance 14 et le ou les capteurs 24, 13 remontant des informations présentant une incertitude supérieure au seuil d'incertitude associé et présentant un niveau de criticité faible.

Cette désactivation permet de ne pas afficher d'information présentant une trop grande incertitude tout en étant peu critique et ainsi d'éviter une limitation du pilotage.

Avantageusement, le dispositif électronique de surveillance 14 comprend en outre un module d'alerte 54.

Le module d'alerte 54 est propre à recevoir du module de traitement 42 l'au moins une information avec l'incertitude de mesure associée et/ou la latence mesurée.

Le module d'alerte 54 est propre à émettre un signal d'alerte en fonction de l'incertitude déterminée et/ou de la latence mesurée. En particulier, le module d'alerte 54 est propre à envoyer le signal d'alerte à l'au moins un écran d'affichage 38, l'écran d'affichage 38 étant propre à afficher le signal d'alerte.

Le module d'alerte 54 est avantageusement propre à émettre un signal d'alerte lorsque l'incertitude déterminée est supérieure à un seuil d'alerte prédéterminé propre à chaque type d'information.

A titre d'exemple, le seuil d'alerte associé à une position géographique d'un élément 47 est égal à 75 cm.

A titre d'autre exemple, le seuil d'alerte associé à une vitesse d'un élément 47 est égal à 8 km/h.

A titre d'autre exemple, le seuil d'alerte associé à la catégorisation d'un élément 47 est égal à 20% d'incertitude sur la catégorie de l'obstacle 22.

En variante ou en complément, le module d'alerte 54 est propre à émettre un signal d'alerte lorsque la latence mesurée est supérieure à un seuil d'alerte prédéterminé. Le seuil d'alerte est notamment inférieur au seuil de latence. Par exemple, le seuil d'alerte est égal à 150 ms.

Ainsi, l'affichage d'un message d'alerte permet à l'opérateur d'anticiper un éventuel bridage dû à une latence trop élevée et par exemple de réduire la latence en coupant la communication avec l'un des véhicules 12 de la flotte ou de désactiver la communication avec au moins un capteur 24, 13.

Le module de réception d'informations 36, le module de commande 40, le module de traitement 42, le module de limitation 44, le module de délestage 52 et le module de d'alerte 54 sont typiquement réalisés sous la forme de logiciels stockés dans une mémoire (non représentée) et aptes à être exécutés par un processeur (non représenté) associé à ladite mémoire, la mémoire et le processeur formant ensemble une unité de traitement d'informations incluse dans le dispositif de surveillance 14. En variante, le module de réception d'informations 36, le module de commande 40, le module de traitement 42, le module de limitation 44, le module de délestage 52 et le module de d'alerte 54 sont réalisés sous la forme d'un composant logique programmable ou sous la forme d'un circuit intégré dédié inclus dans le dispositif de surveillance 14.

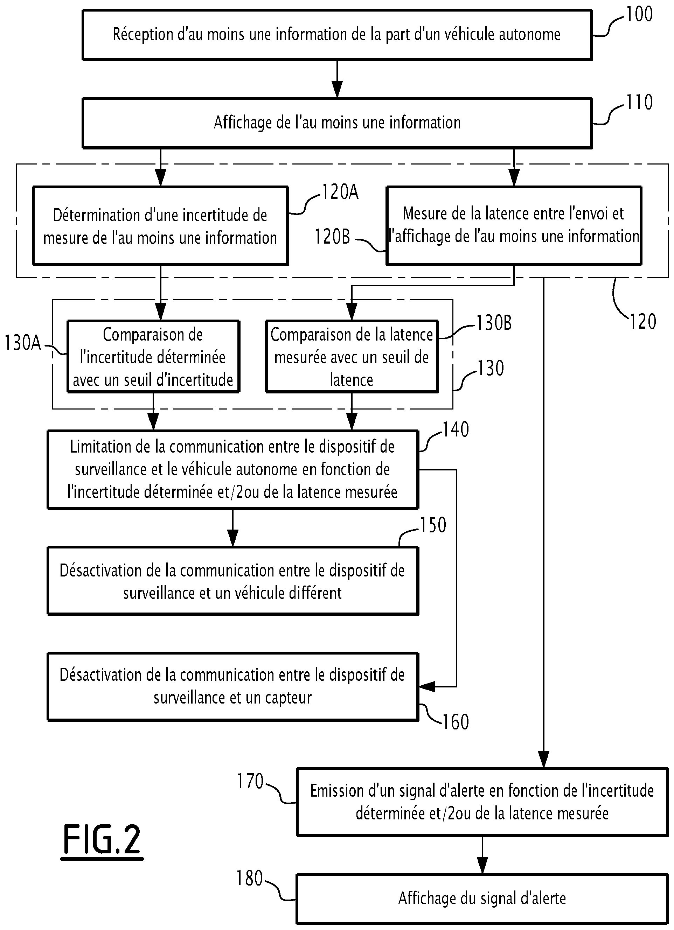

Un procédé de bridage du pilotage à distance d'un véhicule d'intérêt 46, mis en œuvre par le dispositif électronique de surveillance 14 va maintenant être décrit, en référence à la figure 2.

Le procédé de bridage comprend une première étape 100 de réception d'au moins une information d'au moins un premier capteur surveillant l'environnement du véhicule d'intérêt 48.

Puis, lors de la sous-étape 110, l'au moins une information est affichée sur l'écran d'affichage 38.

La sous-étape 110 est suivie d'une étape 120 de détermination et/ou de mesure.

L'étape 120 comprend au moins une sous étape, avantageusement deux sous étapes 120A et 120B. Ainsi l'étape 120 comprend uniquement la sous étape 120A ou uniquement l'étape 120B ou les deux sous étapes 120A et 120B en parallèle.

La sous étape 120A est une étape de détermination d'une incertitude de mesure de l'au moins une information envoyée par l'au moins un premier capteur.

La sous étape 120B est une étape de mesure de la latence entre l'envoi de l'au moins une information par le capteur embarqué 24 et l'affichage de l'au moins une information sur l'écran d'affichage 38.

Puis le procédé comprend une étape 130 de comparaison.

L'étape 130 comprend au moins une sous étape, avantageusement deux sous étapes 130A et 130B. Ainsi l'étape 130 comprend uniquement la sous étape 130A ou uniquement l'étape 130B ou les deux sous étapes 130A et 130B en parallèle.

La sous étape 130A fait suite à la sous étape 120A. La sous étape 130A est une étape de comparaison de l'incertitude déterminée avec le seuil d'incertitude.

La sous étape 130B fait suite à la sous étape 120B. La sous étape 130B est une étape de comparaison de la latence mesurée avec le seuil de latence.

Puis le procédé comprend une étape 140 de limitation de la communication entre le dispositif de surveillance 14 et le véhicule 12 d'intérêt en fonction de l'incertitude déterminée et/ou de la latence calculée.

En particulier, lors de cette étape 140, le module de limitation 44 bride le module de commande 40 afin d'empêcher l'envoi de commandes à destination du véhicule d'intérêt 46.

Puis lors d'une sous-étape optionnelle 150, le module de limitation 44 désactive la communication entre le dispositif de surveillance 14 et au moins l'un des véhicules 12 de la flotte, notamment différent du véhicule d'intérêt 46 et présentant un risque de sécurité moins important que le véhicule 12 d'intérêt.

Dans un mode de réalisation avantageux, lorsque le dispositif de surveillance 14 reçoit des informations d'au moins deux capteurs 24, 13, le procédé comprend également une étape 160 de désactivation de la communication entre le dispositif de surveillance 14 et au moins l'un des capteurs 24, 13.

En particulier, le module de limitation 44 désactive la communication entre le dispositif de surveillance 14 et le ou les capteurs 24, 13 présentant le niveau de criticité le plus faible.

Le procédé de bridage comprend optionnellement une étape 170 faisant suite à l'étape 120. Cette étape 170 est une étape d'émission d'un signal d'alerte en fonction de la latence calculée et/ou de l'incertitude déterminée.

En particulier, lors de cette étape 170, le module d'alerte 54 envoie le signal d'alerte à l'au moins un écran d'affichage 38.

Puis lors d'une étape 180, l'écran d'affichage 38 affiche le signal d'alerte.

Le module d'alerte 54 émet avantageusement un signal d'alerte lorsque l'incertitude déterminée et/ou la latence mesurée est supérieure à un seuil d'alerte prédéterminé inférieur au seuil d'incertitude ou de latence.

Grâce à l'invention décrite ci-dessus, la sécurité des passagers du véhicule est significativement améliorée. En effet, l'inhibition du module de transmission 30 et/ou le blocage de l'envoi de commande en cas d'incertitude déterminée et/ou de latence mesurée trop importante permet d'éviter un déplacement du véhicule 12 qui ne serait pas pertinent en regard de la réalité actuelle de l'environnement du véhicule 12.

## Revendications

1. Dispositif de surveillance (14) à distance d'une flotte de véhicules automobiles autonomes (12) permettant le pilotage à distance de la flotte par un opérateur et comprenant au moins un écran d'affichage (38), le dispositif de surveillance (14) étant propre à recevoir au moins une information d'au moins un premier capteur (24, 13) surveillant l'environnement d'un véhicule d'intérêt (46) de la flotte, le dispositif de surveillance (14) étant propre à afficher l'au moins une information sur l'écran d'affichage (38), le dispositif de surveillance (14) comprenant :
- un module de traitement (42) configuré pour déterminer une incertitude de mesure de l'au moins une information envoyée par l'au moins un premier capteur (24, 13) et/ou pour mesurer une latence entre l'envoi de l'au moins une information par l'au moins un premier capteur (24, 13) et l'affichage de l'au moins une information sur l'écran d'affichage (38) ; et
- un module de limitation (44) configuré pour limiter le pilotage dudit véhicule d'intérêt (46) par l'opérateur en fonction de l'incertitude déterminée et/ou de la latence mesurée.

2. Dispositif de surveillance (14) selon la revendication 1, dans lequel l'au moins une information est choisie parmi le groupe consistant en :
- une position géographique du véhicule d'intérêt (46) ;
- une vitesse du véhicule d'intérêt (46) ;
- une accélération du véhicule d'intérêt (46) ;
- une position géographique d'un élément (47) environnant le véhicule d'intérêt (46) ;
- une vitesse d'un élément (47) environnant le véhicule d'intérêt (46) ;
- une accélération d'un élément (47) environnant le véhicule d'intérêt (46) ; et
- une classification d'un élément (47) environnant le véhicule d'intérêt (46).

3. Dispositif de surveillance (14) selon la revendication 2, dans lequel l'élément (47) environnant le véhicule d'intérêt (46) est choisi parmi le groupe consistant en :
- un objet (48) situé dans les environs du véhicule d'intérêt (46) ;
- un individu (50) situé dans les environs du véhicule d'intérêt (46) ; et
- un obstacle (22) rencontré par le véhicule d'intérêt (46).

4. Dispositif de surveillance (14) selon l'une quelconque des revendications précédentes, dans lequel le module de limitation (44) est configuré pour limiter le pilotage lorsqu'au moins l'une des incertitudes est supérieure à un seuil d'incertitude associé et/ou lorsque la latence mesurée est supérieure à un seuil de latence associé.

5. Dispositif de surveillance (14) selon l'une quelconque des revendications précédentes, dans lequel le dispositif de surveillance (14) comprend un module de commande (40) propre à envoyer au moins une commande de mouvement à au moins un véhicule (12) de la flotte, le module de limitation étant propre à bloquer l'envoi de toute commande de mouvement au véhicule d'intérêt (46).

6. Dispositif de surveillance (14) selon l'une quelconque des revendications précédentes, dans lequel le dispositif de surveillance (14) est propre à recevoir au moins une information d'au moins un deuxième capteur (24, 13), le deuxième capteur (24, 13) étant choisi parmi le groupe consistant en un capteur embarqué (24) à bord de l'un des véhicules autonomes (12) et un capteur d'infrastructure (13) disposé à l'extérieur des véhicules autonomes (12), le dispositif de surveillance (14) comprenant un module de délestage (52) propre à désactiver la communication entre le dispositif de surveillance (14) et l'au moins un deuxième capteur (24, 13) en fonction de l'incertitude déterminée et/ou de la latence mesurée.

7. Dispositif de surveillance (14) selon l'une quelconque des revendications précédentes, comprenant un module de délestage (52) propre à désactiver la communication entre le dispositif de surveillance (14) et au moins l'un des véhicules (12) de la flotte en fonction de la latence mesurée.

8. Dispositif de surveillance (14) selon l'une quelconque des revendications précédentes, comprenant un module d'alerte (54) propre à émettre un signal d'alerte en fonction de l'incertitude déterminée et/ou de la latence calculée, l'écran d'affichage (38) étant propre à afficher le signal d'alerte.

9. Système de transport (10) comprenant :
- un dispositif de surveillance (14) selon l'une quelconque des revendications 1 à 8; et
- une flotte de véhicules automobiles autonomes (12) surveillés à distance par le dispositif de surveillance (14).

10. Procédé de bridage mis en œuvre au moyen d'un dispositif de surveillance (14) à distance d'une flotte de véhicules automobiles autonomes (12), le dispositif de surveillance (14) permettant le pilotage à distance de la flotte par un opérateur et comprenant au moins un écran d'affichage (38), le procédé de bridage comprenant les étapes suivantes :
- réception (100) d'au moins une information d'au moins un premier capteur (24, 13) surveillant l'environnement d'un véhicule d'intérêt (46) de la flotte ;
- affichage (110) de l'au moins une information sur un écran d'affichage (38) ;
- détermination (120A) d'une incertitude de mesure de l'au moins une information envoyée par l'au moins un premier capteur (34, 13) et/ou mesure (120B) d'une latence entre l'envoi de l'au moins une information par l'au moins un premier capteur (24, 13) et l'affichage de l'au moins une information sur l'écran d'affichage (38) ; et
- limitation du pilotage dudit véhicule d'intérêt (46) par l'opérateur en fonction de l'incertitude déterminée et/ou de la latence mesurée.

11. Produit programme ordinateur comportant les instructions logicielles qui, lorsque mises en œuvre par un équipement informatique, mettent en œuvre le procédé de bridage selon la revendication 10.

## Patentansprüche

1. Fernüberwachungseinrichtung (14) für eine Flotte autonomer Kfz (12), die die Fernsteuerung der Flotte durch einen Bediener ermöglicht und mindestens einen Bildschirm (38) umfasst, wobei die Einrichtung (14) geeignet ist, mindestens eine Information von mindestens einem ersten Sensor (24, 13) zu empfangen, der die Umgebung eines interessierenden Fahrzeugs (46) der Flotte überwacht, wobei die Einrichtung (14) geeignet ist, die mindestens eine Information auf dem Bildschirm (38) anzuzeigen, wobei die Einrichtung (14) umfasst:
- ein Verarbeitungsmodul (42), das konfiguriert ist zum Bestimmen einer Messunsicherheit der vom mindestens einem ersten Sensor (24, 13) versandten mindestens einen Information und/oder zum Messen einer Latenzzeit zwischen dem Versand der mindestens einen Information durch den mindestens einen ersten Sensor (24, 13) und der Anzeige der mindestens einen Information auf dem Bildschirm (38); und
- ein Einschränkungsmodul (44), das zum Einschränken der Steuerung des interessierenden Fahrzeugs (46) durch den Bediener als Funktion der bestimmten Unsicherheit und/oder der gemessenen Latenzzeit konfiguriert ist.

2. Einrichtung (14) nach Anspruch 1, wobei die mindestens eine Information aus folgender Gruppe gewählt ist:
- eine geografische Lage des interessierenden Fahrzeugs (46);
- eine Geschwindigkeit des interessierenden Fahrzeugs (46);
- eine Beschleunigung des interessierenden Fahrzeugs (46);
- eine geografische Lage eines Elements (47) in der Umgebung des interessierenden Fahrzeugs (46);
- eine Geschwindigkeit eines Elements (47) in der Umgebung des interessierenden Fahrzeugs (46);
- eine Beschleunigung eines Elements (47) in der Umgebung des interessierenden Fahrzeugs (46) und
- eine Einstufung eines Elements (47) in der Umgebung des interessierenden Fahrzeugs (46).

3. Einrichtung (14) nach Anspruch 2, wobei das Element (47) in der Umgebung des interessierenden Fahrzeugs (46) aus folgender Gruppe gewählt ist:
- ein Objekt (48) in der Umgebung des interessierenden Fahrzeugs (46);
- eine Person (50) in der Umgebung des interessierenden Fahrzeugs (46) und
- ein vom interessierenden Fahrzeug (46) angetroffenes Hindernis (22).

4. Einrichtung (14) nach einem der vorstehenden Ansprüche, wobei das Einschränkungsmodul (44) konfiguriert ist zum Einschränken der Steuerung, wenn mindestens eine der Unsicherheiten einen dieser zugeordneten Unsicherheitsschwellenwert übersteigt und/oder die Latenzzeit einen dieser zugeordneten Latenzzeitschwellenwert übersteigt.

5. Einrichtung (14) nach einem der vorstehenden Ansprüche, wobei die Einrichtung (14) ein Steuermodul (40) umfasst, das zum Senden mindestens eines Bewegungsbefehls an mindestens ein Fahrzeug (12) der Flotte geeignet ist, wobei das Einschränkungsmodul geeignet ist, den Versand eines beliebigen Bewegungsbefehls an das interessierende Fahrzeug (46) zu blockieren.

6. Einrichtung (14) nach einem der vorstehenden Ansprüche, wobei die Einrichtung (14) geeignet ist, mindestens eine Information von mindestens einem zweiten Sensor (24, 13) zu empfangen, wobei der zweite Sensor (24, 13) aus folgender Gruppe gewählt ist: ein Bordsensor (24) eines der autonomen Fahrzeuge (12) und ein außerhalb der autonomen Fahrzeuge (12) angeordneter Infrastruktursensor (13), wobei die Einrichtung (14) umfasst: ein Entlastungsmodul (52), das geeignet ist, die Kommunikationen zwischen der Einrichtung (14) und mindestens einem zweiten Sensor (24, 13) als Funktion der bestimmten Unsicherheit und/oder der gemessenen Latenzzeit zu deaktivieren.

7. Einrichtung (14) nach einem der vorstehenden Ansprüche, umfassend ein Entlastungsmodul (52), das geeignet ist, die Kommunikationen zwischen der Einrichtung (14) und mindestens einem der Fahrzeuge (12) der Flotte als Funktion der gemessenen Latenzzeit zu deaktivieren.

8. Einrichtung (14) nach einem der vorstehenden Ansprüche, umfassend ein Alarmmodul (54), das geeignet ist, ein Alarmsignal als Funktion der bestimmten Unsicherheit und/oder der berechneten Latenzzeit abzugeben, wobei der Bildschirm (38) zum Anzeigen des Alarmsignals geeignet ist.

9. Beförderungssystem (10), umfassend:
- eine Einrichtung (14) nach einem der Ansprüche 1 - 8 und
- eine Flotte autonomer Kfz (12), die von der Einrichtung (14) fernüberwacht werden.

10. Von einer Fernüberwachungseinrichtung (14) einer Flotte autonomer Kfz (12) ausgeführtes Einschränkungsverfahren, wobei die Einrichtung (14) die Fernsteuerung der Flotte durch einen Bediener ermöglicht und mindestens einen Bildschirm (38) umfasst, wobei das Verfahren die Schritte umfasst:
- Empfangen (100) mindestens einer Information von mindestens einem ersten Sensor (24, 13), der die Umgebung eines interessierenden Fahrzeugs (46) der Flotte überwacht,
- Anzeigen (110) der mindestens einen Information auf einem Bildschirm (38);
- Bestimmen (120A) einer Messunsicherheit der vom mindestens einem ersten Sensor (34, 13) versandten mindestens einen Information und/oder Messen (120B) einer Latenzzeit zwischen dem Versand der mindestens einen Information durch den mindestens einen ersten Sensor (24, 13) und der Anzeige der mindestens einen Information auf dem Bildschirm (38); und
- Einschränken der Steuerung des interessierenden Fahrzeugs (46) durch den Bediener als Funktion der bestimmten Unsicherheit und/oder der gemessenen Latenzzeit konfiguriert ist.

11. Computerprogrammprodukt, umfassend Softwarebefehle, die bei Ausführung durch ein EDV-Gerät das Verfahren nach Anspruch 10 ausführen.

## Claims

1. A remote monitoring device (14) for a fleet of autonomous motor vehicles (12) making it possible for an operator to pilot the fleet remotely and comprising at least one display screen (38), the monitoring device (14) being able to receive at least one piece of information from at least a first sensor (24, 13) monitoring the environment of a vehicle of interest (46) in the fleet, the monitoring device (14) being able to display the at least one piece of information on the display screen (38), the monitoring device (14) comprising:
- a processing module (42) configured to determine a measuring uncertainty of the at least one piece of information sent by the at least one first sensor (24, 13) and/or to measure a lag between the sending of the at least one piece of information by the at least one first sensor (24, 13) and the display of the at least one piece of information on the display screen (38); and
- a limiting module (44) configured to limit the piloting of said vehicle of interest (46) by the operator as a function of the determined uncertainty and/or the measured lag.

2. The monitoring device (14) according to claim 1, wherein at least one piece of information is chosen from the group consisting of:
- a geographical position of the vehicle of interest (46);
- a speed of the vehicle of interest (46);
- an acceleration of the vehicle of interest (46);
- a geographical position of an element (47) surrounding the vehicle of interest (46);
- a speed of an element (47) surrounding the vehicle of interest (46);
- an acceleration of an element (47) surrounding the vehicle of interest (46); and
- a classification of an element (47) surrounding the vehicle of interest (46).

3. The monitoring device (14) according to claim 2, wherein the element (47) surrounding the vehicle of interest (46) is chosen from the group consisting of:
- an object (48) located in the surroundings of the vehicle of interest (46);
- an individual (50) located in the surroundings of the vehicle of interest (46); and
- an obstacle (22) encountered by the vehicle of interest (46).

4. The monitoring device (14) according to any one of the preceding claims, wherein the limiting module (44) is configured to limit the piloting when at least one of the uncertainties exceeds an associated uncertainty threshold and/or when the measured lag exceeds an associated lag threshold.

5. The monitoring device (14) according to any one of the preceding claims, wherein the monitoring device (14) comprises a control module (40) able to send at least one movement command to at least one vehicle (12) of the fleet, the limiting module being able to block the sending of any movement command to the vehicle of interest (46).

6. The monitoring device (14) according to any one of the preceding claims, wherein the monitoring device (14) is able to receive at least one piece of information from at least one second sensor (24, 13), the second sensor (24, 13) being chosen from the group consisting of: a sensor (24) embedded on board one of the autonomous vehicles (12) and an infrastructure sensor (13) positioned outside the autonomous vehicles (12), the monitoring device (14) comprising a load shedding module (52) able to deactivate the communication between the monitoring device (14) and the at least one second sensor (24, 13) as a function of the determined uncertainty and/or the measured lag.

7. The monitoring device (14) according to any one of the preceding claims, comprising a load shedding module (52) able to deactivate the communication between the monitoring device (14) and at least one of the vehicles (12) of the fleet as a function of the measured lag.

8. The monitoring device (14) according to any one of the preceding claims, comprising an alert module (54) able to emit an alert signal as a function of the determined uncertainty and/or the calculated lag, the display screen (38) being able to display the alert signal.

9. A transport system (10) comprising:
- a monitoring device (14) according to any one of claims 1 to 8; and
- a fleet of autonomous motor vehicles (12) monitored remotely by the monitoring device (14).

10. A flanging method implemented using a remote monitoring device (14) for a fleet of autonomous motor vehicles (12), the monitoring device (14) allowing the remote piloting of the fleet by an operator and comprising at least one display screen (38), the flanging method comprising the following steps:
- receiving (100) at least one piece of information from at least one first sensor (24, 13) monitoring the environment of a vehicle of interest (46) of the fleet;
- displaying (110) the at least one piece of information on a display screen (38);
- determining (120A) a measuring uncertainty of the at least one piece of information sent by the at least one first sensor (34, 13) and/or measuring (120B) a lag between the sending of the at least one piece of information by the at least one first sensor (24, 13) and the display of the at least one piece of information on the display screen (38); and
- limiting the piloting of said vehicle of interest (46) by the operator as a function of the determined uncertainty and/or the measured lag.

11. A computer program product including the software instructions which, when implemented by a piece of computer equipment, carry out the flanging method according to claim 10.
